(19) Europäisches Patentamt
European Patent Office
Office européen des brevets

(11) Veröffentlichungsnummer: **0 068 186**
**B1**

(12) # EUROPÄISCHE PATENTSCHRIFT

(45) Veröffentlichungstag der Patentschrift: **23.01.85**

(51) Int. Cl.⁴: **C 09 B 67/48**, C 09 B 29/42, C 09 B 41/00, C 09 B 67/10

(21) Anmeldenummer: **82104972.3**

(22) Anmeldetag: **07.06.82**

(54) **Färbestabile Modifikation eines Dispersionsfarbstoffs, Verfahren zu ihrer Herstellung und Verwendung.**

(30) Priorität: **26.06.81 DE 3125159**

(43) Veröffentlichungstag der Anmeldung: **05.01.83 Patentblatt 83/1**

(45) Bekanntmachung des Hinweises auf die Patenterteilung: **23.01.85 Patentblatt 85/4**

(84) Benannte Vertragsstaaten: **BE CH DE FR GB IT LI**

(56) Entgegenhaltungen:
**DE-A-2 735 376**
**FR-A-2 076 138**
**GB-A-2 054 632**
**US-A-2 007 382**

(73) Patentinhaber: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Mayer, Hans, Dr., Lauterbacher Strasse 12, D-6000 Frankfurt am Main 61 (DE)**
Erfinder: **Hofmann, Klaus, Meerholzer Strasse 50, D-6000 Frankfurt am Main 61 (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft die färbestabile Modifikation (β-Modifikation) des Farbstoffs der Formel I

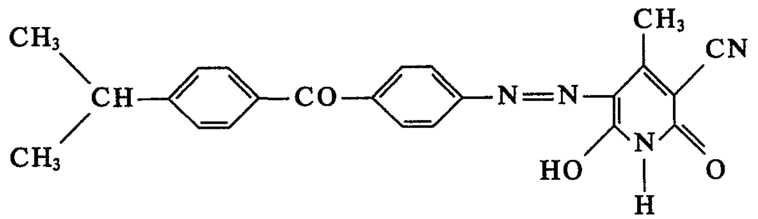

(I)

mit dem Röntgenbeugungsdiagramm (Cu-Kα-Strahlung) mit folgenden Linien starker Intensität bei Beugungswinkel θ [°] von 3,75; 6,40; 12,35; Linien mittlerer Intensität bei Beugungswinkel θ [°] von 6,60; 7,30; 7,60; 7,90; 8,10; 8,35; 9,30; 9,70; 9,90; 10,20; 10,50; 12,70; 13,90; Linien geringer Intensität bei Beugungswinkel θ [°] von 5,65; 8,75; 11,25; 11,70; 13,35; 15,10 und 15,55.

Die Erfindung betrifft ferner Verfahren zur Herstellung der färbestabilen β-Modifikation des Farbstoffs I und ihre Verwendung zum Färben und Bedrucken von synthetischem, hydrophobem Fasermaterial und Gemischen dieser Fasermaterialien mit Cellulosefasern.

Der Farbstoff der Formel I wird, wie in der DE-OS 2 001 821 beschrieben, durch Diazotieren von 4-Amino-4'-iso-propyl-benzophenon in wäßriger Salzsäure mit Natriumnitrit und anschließendes Kuppeln auf 3-Cyan-4-methyl-6-hydroxy-2-pyridon erhalten. Dabei fällt die färbeinstabile α-Modifikation an, die unter den in der Färbepraxis auftretenden Bedingungen keine genügende Stabilität besitzt.

Die färbeinstabile α-Modifikation weist das in Fig. 2 gezeigte Röntgenbeugungsdiagramm (Cu-Kα-Strahlung) auf, das eine Linie starker Intensität bei einem Beugungswinkel θ [°] von 2,35; Linien mittlerer Intensität bei Beugungswinkel θ [°] von 6,35; 7,10; 8,25; 9,15; 12,45; 13,10 und 14,05 und Linien geringer Intensität bei Beugungswinkel θ [°] von 4,35; 5,75; 7,45; 8,85; 10,65; 10,75; 11,30; 12,75; 13,50 und 14,65; 15,25 und 16,20 besitzt.

Die färbeinstabile α-Modifikation des Farbstoffs der Formel I wird in die färbestabile β-Modifikation durch Erhitzen auf Temperaturen von 50 bis 150° C, vorzugsweise 80 bis 140° C, ganz besonders bevorzugt 100 bis 140° C, überführt. Dieses Erhitzen kann in verschiedener Weise durchgeführt werden. In der Regel wird die färbeinstabile α-Modifikation in wäßriger Suspension oder in der Suspension eines organischen Lösungsmittels, zweckmäßigerweise unter Rühren, auf die genannten Temperaturen erhitzt. Es ist zweckmäßig, den pH-Wert der wäßrigen Suspension auf 3 bis 5, vorzugsweise 3,5 bis 4,5, einzustellen. Der zu erhitzenden Suspension werden gegebenenfalls Dispergiermittel und/oder Emulgatoren und/oder Netzmittel und/oder Lösungsmittel zugesetzt. Wenn auf Temperaturen erhitzt wird, die über dem Siedepunkt der flüssigen Phase liegen, ist die Anwendung von Überdruck erforderlich. Das Erhitzen wird so lange durchgeführt, bis die α-Modifikation in die β-Modifikation umgewandelt worden ist, was in der Regel 1 bis 15 Stunden dauert. Die Umwandlung kann röntgenographisch oder mikroskopisch an entnommenen Proben verfolgt werden.

Geeignete Dispergiermittel sind zum Beispiel Kondensationsprodukte aus Naphthalinsulfonsäure und Formaldehyd oder aus Phenol und Formaldehyd, Ligninsulfonate oder Sulfitcelluloseablauge oder andere anionische, kationische oder nichtionische oberflächenaktive Verbindungen.

Geeignete Lösungsmittel sind z. B. Ketone, wie Methyl-ethyl-keton oder Alkohole, wie z. B. n-Propanol, iso-Propanol, insbesondere aber Ethanol.

Das Erhitzen kann auch so durchgeführt werden, daß die färbeinstabile α-Modifikation aus Ethanol oder einem Ethanol-Wasser-Gemisch umkristallisiert wird. Der umkristallisierte Farbstoff stellt dann die färbestabile β-Modifikation dar.

Das Erhitzen kann auch im Verlauf der üblichen Überführung des Farbstoffs in eine hohe Feinverteilung vorgenommen werden. Die färbeinstabile α-Modifikation wird dabei, vorzugsweise unter Zusatz von Dispergiermitteln, sowie gegebenenfalls anderen üblichen Zusätzen (wie z. B. Staubschutz-, Frostschutz-, Netzmittel, Austrocknungsverhinderer etc.) naß auf üblichen Vorrichtungen, wie z. B. Mühlen oder Kneter, in eine feindisperse Form überführt. Geeignete Mühlen sind z. B. Kugel-, Schwing-, Perl-, Sandmühlen. Wenn die Überführung des Farbstoffs in eine feindisperse Form bei den genannten Temperaturen von 50 bis 150° C, vorzugsweise 80 bis 140° C, ganz besonders bevorzugt 100 bis 140° C, durchgeführt wird, erfolgt dabei auch eine Umwandlung der färbeinstabilen α-Modifikation des Farbstoffs der Formel I in die färbestabile β-Modifikation des Farbstoffs der Formel I.

Die färbestabile β-Modifikation des Farbstoffs der Formel I wird auch erhalten, wenn diazotiertes 4-Amino-4'-iso-propylbenzophenon in Ethanol oder in Ethanol mit 10 bis 90 Gew.-% Wasser bei Temperaturen von 30 bis 80° C auf 3-Cyan-4-methyl-6-hydroxy-2-pyridon gekuppelt wird.

Das mit Cu-Kα-Strahlung aufgenommene Röntgenbeugungsdiagramm der färbestabilen β-Modifikation ist in Fig. 1 dargestellt. Zur Aufnahme der Röntgenbeugungsdiagramme wurde ein rechnergesteuertes Siemens D 500 Pulverdifraktometer benutzt.

Sofern die färbestabile β-Modifikation des Farbstoffs der Formel I nicht im Verlauf der Überführung in eine hohe Feinverteilung bei 80 bis 140° C hergestellt worden ist und daher bereits in hoher Feinverteilung vorliegt, wird sie in üblicher Weise in eine hohe Feinverteilung überführt.

Die in hohe Feinverteilung überführte färbestabile neue β-Modifikation des Farbstoffs der Formel I eignet sich vorzüglich zum Färben und Bedrucken von synthetischem, hydrophobem Fasermaterial und Mischungen dieser Fasermaterialien mit Cellulosefasern bei Temperaturen von 100 bis 220°C. Bevorzugte hydrophobe Fasermaterialien sind solche aus aromatischen Polyestern und Celluloseestern, insbesondere Polyestern. Sie liefert hierauf nach den üblichen Färbe- und Druckverfahren farbstarke gelbe Färbungen und Drucke mit sehr guten Echtheitseigenschaften, insbesondere sehr guter Licht- und Sublimierechtheit, sehr gutem Aufbauvermögen und sehr guter Thermomigration. Der Farbstoff in der β-Modifikation zeigt eine gute pH-Beständigkeit in der Färbeflotte und eine sehr gute Marks- und Spencer-Echtheit und hat ein ausgezeichnetes Egalisiervermögen. Die neue färbestabile β-Modifikation hat dabei nicht die Nachteile der färbeinstabilen α-Modifikation, die bei Färbeverfahren, bei denen sie längere Zeit im wäßrigen Medium, gegebenenfalls in Gegenwart von Hilfsmitteln, einer höheren Temperatur ausgesetzt ist, zu Farbstoffausfällungen und somit zu Abfiltrationen führt. Die erfindungsgemäße färbestabile β-Modifikation eignet sich daher hervorragend zum Färben von Wickelkörpern, insbesondere von Kreuzspulen.

In den nachfolgenden Beispielen bedeuten die Teile Gewichtsteile.

Beispiel 1

100 Teile des nach DE-OS 2 001 821 aus 4-Amino-4'-iso-propyl-benzophenon und 3-Cyan-4-methyl-6-hydroxy-2-pyridon hergestellten Farbstoffs der Formel I (färbeinstabile α-Modifikation) werden in Form des Preßkuchens in 200 Teilen Wasser suspendiert und mit Essigsäure ein pH von 4 eingestellt. Dann wird unter Druck eine Stunde bei 130°C gerührt. Danach ist der Farbstoff von der färbeinstabilen α- in die färbestabile β-Modifikation umgewandelt. Die β-Modifikation wird abfiltriert und mit 233 Teilen eines modifizierten Ligninsulfonates und 444 Teilen Wasser versetzt und in einer Sandmühle bis zu einer Feinverteilung von ≤1 μm gemahlen. Das nach dem Sprühtrocknen erhaltene Farbstoffpulver genügt allen technischen Anforderungen.

Beispiel 2

100 Teile der nach Beispiel 1 erhaltenen färbeinstabilen α-Modifikation des Farbstoffs der Formel I werden als getrocknete Ware aus 600 Teilen Ethanol umkristallisiert. Der umkristallisierte Farbstoff liegt in der färbestabilen β-Modifikation vor.

Die so erhaltene β-Modifikation wird, wie im Beispiel 1 angegeben, gefinisht und erfüllt alle Anforderungen der Praxis.

Beispiel 3

100 Teile der nach Beispiel 1 erhaltenen färbeinstabilen α-Modifikation des Farbstoffs der Formel I in Form des Preßkuchens werden mit 500 Teilen des modifizierten Ligninsulfonats und 197 Teilen Wasser versetzt und unter Druck 2 Stunden bei 120°C gerührt. Nach dem Abkühlen auf 20°C wird in einer Sandmühle bis zur Feinverteilung von ≤1 μm gemahlen. Man erhält eine flüssige Farbstoffpräparation von einwandfreien färberischen Eigenschaften und guter Lagerstabilität.

**Patentansprüche**

1. Färbestabile β-Modifikation des Farbstoffs der Formel I

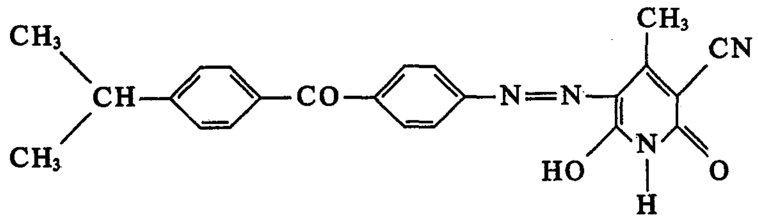

(I)

mit dem Röntgenbeugungsdiagramm (Cu-Kα-Strahlung mit folgenden Linien starker Intensität bei Beugungswinkel $\theta$ [°] von 3,75; 6,40; 12,35; Linien mittlerer Intensität bei Beugungswinkel $\theta$ [°] von 6,60; 7,30; 7,60; 7,90; 8,10; 8,35; 9,30; 9,70; 9,90; 10,20; 10,50; 12,70; 13,90; Linien geringer Intensität bei Beugungswinkel $\theta$ [°] von 5,65; 8,75; 11,25; 11,70; 13,35; 15,10 und 15,55.

2. Verfahren zur Herstellung der in Anspruch 1 angegebenen färbestabilen β-Modifikation des

Farbstoffs der Formel I, dadurch gekennzeichnet, daß der Farbstoff der Formel I in färbeinstabiler $\alpha$-Modifikation auf Temperaturen von 50 bis 150° C erhitzt wird.

3. Verfahren nach Anspruch 2, dadurch gekennzeichnet, daß die färbeinstabile $\alpha$-Modifikation auf Temperaturen von 80 bis 140° C erhitzt wird.

4. Verfahren nach den Ansprüchen 2 oder 3, dadurch gekennzeichnet, daß die färbeinstabile $\alpha$-Modifikation auf Temperaturen von 100 bis 140° C erhitzt wird.

5. Verfahren nach einem oder mehreren der Ansprüche 2 bis 4, dadurch gekennzeichnet, daß die färbeinstabile $\alpha$-Modifikation in wäßriger Suspension erhitzt wird.

6. Verfahren nach einem oder mehreren der Ansprüche 2 bis 5, dadurch gekennzeichnet, daß die färbeinstabile $\alpha$-Modifikation in Gegenwart von Dispergiermittel und/oder Emulgatoren und/oder Netzmittel und/oder Lösungsmittel, insbesondere Ethanol, erhitzt wird.

7. Verfahren nach einem oder mehreren der Ansprüche 2 bis 6, dadurch gekennzeichnet, daß die färbeinstabile $\alpha$-Modifikation im Verlauf der Überführung in eine hohe Feinverteilung erhitzt wird.

8. Verfahren zur Herstellung der in Anspruch 1 angegebenen färbestabilen $\beta$-Modifikation des Farbstoffs der Formel I, dadurch gekennzeichnet, daß diazotiertes 4-Amino-4'-isopropyl-benzophenon in Ethanol oder in Ethanol mit 10 bis 90 Gew.-% Wasser bei Temperaturen von 30 bis 80° C auf 3-Cyan-4-methyl-6-hydroxy-2-pyridon gekuppelt wird.

9. Verwendung der im Anspruch 1 genannten färbestabilen $\beta$-Modifikation zum Färben und Bedrukken von synthetischem, hydrophobem Fasermaterial oder von Gemischen dieser Fasermaterialien mit Cellulosefasern.

**Claims**

1. Dyeing-stable $\alpha$-modification of the dyestuff of the formula I

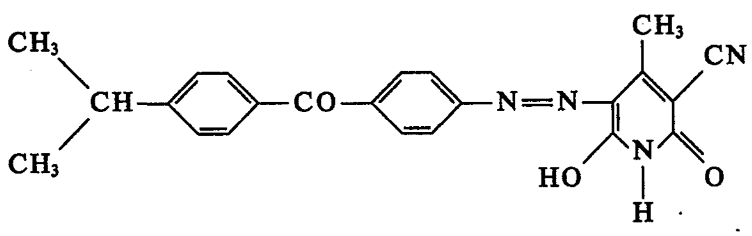

(I)

having an X-ray diffraction diagram (Cu-K$\alpha$-radiation) which has the following high intensity lines at a diffraction angle $\theta$ [°] of 3.75, 6.40 and 12.35, medium intensity lines at a diffraction angle $\theta$ [°] of 6.60, 7.30, 7.60, 7.90, 8.10, 8.35, 9.30, 9.70, 9.90, 10.20, 10.50, 12.70 and 13.90, and low intensity lines at a diffraction angle $\theta$ [°] of 5.65, 8.75, 11.25, 11.70, 13.35, 15.10 and 15.55.

2. Process for the preparation of the dyeing-stable $\beta$-modification of the dyestuff of the formula I, indicated in Claim 1, characterised in that the dyestuff of the formula I in the dyeing-unstable $\alpha$-modification is heated at temperatures of 50 to 150.

3. Process according to Claim 2, charaterised in that the dyeing-unstable $\alpha$-modification is heated at temperatures of 80 to 140° C.

4. Process according to Claim 2 or 3, characterised in that the dyeing-unstable $\alpha$-modification is heated at temperatures of 100 to 140° C.

5. Process according to one or more of Claims 2 to 4, characterised in that the dyeing-unstable $\alpha$-modification is heated up in an aqueous suspension.

6. Process according to one or more of Claims 2 to 5, characterised in that the dyeing-unstable $\alpha$-modification is heated in the presence of dispersing agents and/or emulsifiers and/or wetting agents and/or solvents, in particular ethanol.

7. Process according to one or more of Claims 2 to 6, characterised in that the dyeing-unstable $\alpha$-modification is heated up in the course of a conversion into a state of very fine division.

8. Process for the preparation of the dyeing-stable $\beta$-modification of the dyestuff of the formula I, indicated in Claim 1, characterised in that diazotised 4-amino-4'-isopropylbenzophenone is coupled with 3-cyano-4-methyl-6-hydroxy-2-pyridone at temperatures of 30 to 80° C in ethanol or in ethanol containing 10 to 90% by weight of water.

9. Use of the dyeing-stabile $\beta$-modification mentioned in Claim 1, for dyeing and printing synthetic, hydrophobic fibre material or mixtures of these fibre materials with cellulose fibres.

**Revendications**

1. Modification $\beta$ à teinte stable du colorant de formule I ci-dessous

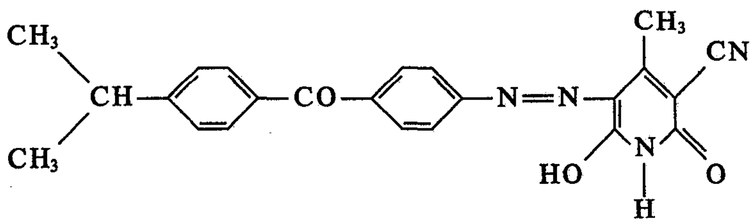

(I)

dont le spectre de diffraction de rayons X (avec la radiation $K\alpha$ du cuivre) présente les raies suivantes à forte intensité aux angles de diffraction $\theta$ [°] de 3,75; 6,40; 12,35; des raies d'intensité moyenne aux angles de diffraction $\theta$ [°] de 6,60; 7,30; 7,60; 7,90; 8,10; 8,35; 9,30; 9,70; 9,90; 10,20; 10,50; 12,70; 13,90; et des raies de plus faible intensité aux angles de diffraction $\theta$ [°] de 5,65; 8,75; 11,25; 11,70; 13,35; 15,10 et 15,55.

2. Procédé de préparation de la modification $\beta$ à teinte stable selon la revendication 1 du colorant de formule I, procédé caractérisé en ce que l'on chauffe la modification $\alpha$ à teinte instable de ce colorant à des températures de 50 à 150° C.

3. Procédé selon la revendication 2 caractérisé en ce que l'on chauffe la modification $\alpha$ instable à des températures de 80 à 140° C.

4. Procédé selon la revendication 2 ou 3 caractérisé en ce que l'on chauffe la modification $\alpha$ instable à des températures de 100 à 140° C.

5. Procédé selon une ou plusieurs des revendications 2 à 4, caractérisé en ce que l'on chauffe la modification $\alpha$ instable en suspension aqueuse.

6. Procédé selon une ou plusieurs des revendications 2 à 5, caractérisé en ce que l'on chauffe la modification $\alpha$ instable en présence d'agents dispersants et/ou émulsionnants et/ou mouillants et/ou de solvants, en particulier en présence d'éthanol.

7. Procédé selon une ou plusieurs revendications 2 à 6, caractérisé en ce que l'on chauffe la modification $\alpha$ instable au cours de l'opération de très fine division du colorant.

8. Procédé de préparation de la modification $\beta$ à teinte stable selon la revendication 1 du colorant de formule I, procédé caractérisé en ce que l'on copule la 4-amino-4'-isopropyl-benzophénone diazotée avec la 3-cyano-4-méthyl-6-hydroxy-2-pyridone dans de l'éthanol ou dans un mélange d'éthanol avec 10 à 90% en poids d'eau, à des températures de 30 à 80° C.

9. L'utilisation de la modification $\beta$ à teinte stable selon la revendication 1 pour la teinture et l'impression de matières fibreuses synthétiques hydrophobes ainsi que de mélanges de ces matières fibreuses avec des fibres cellulosiques.

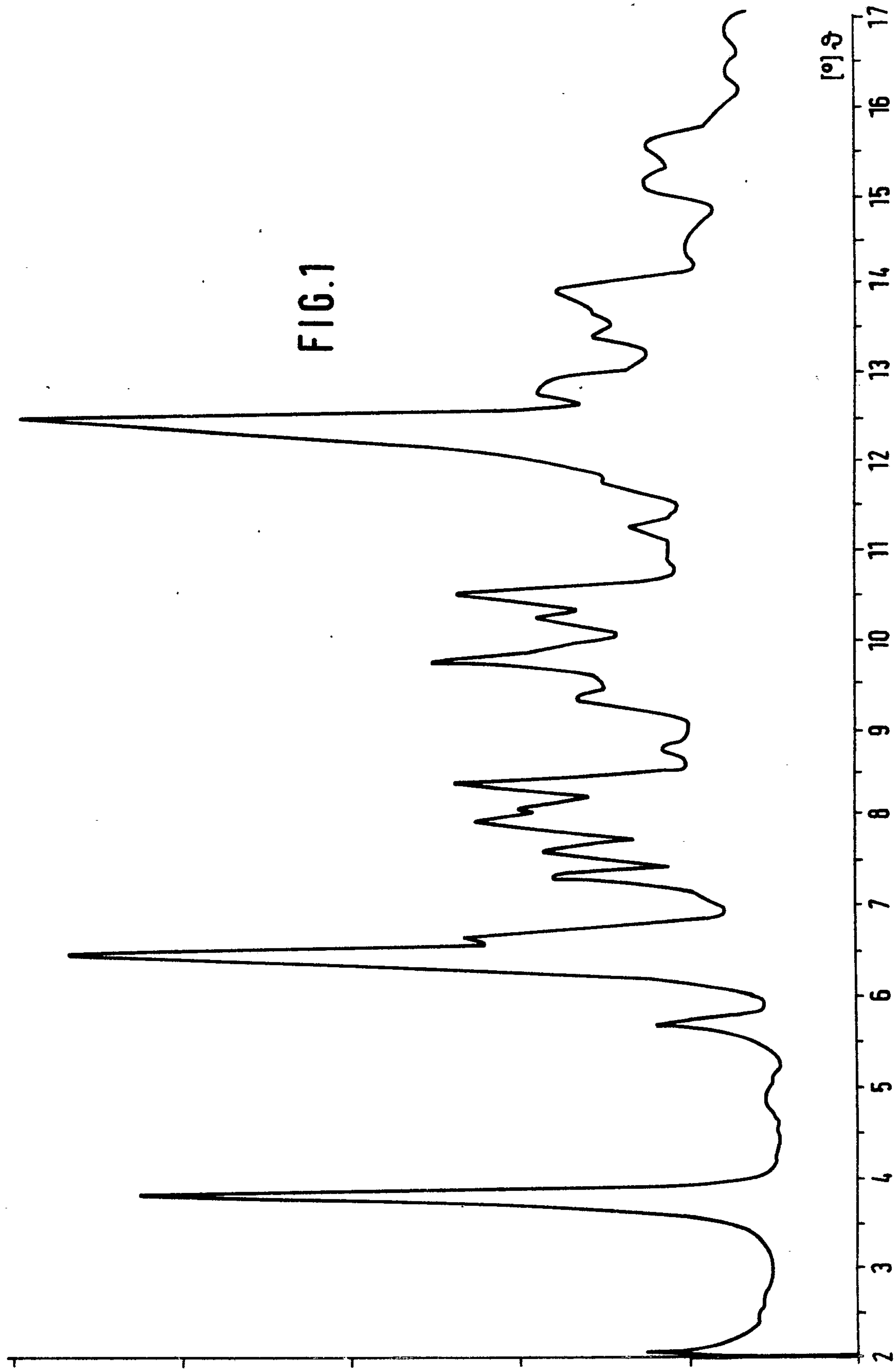


FIG.1

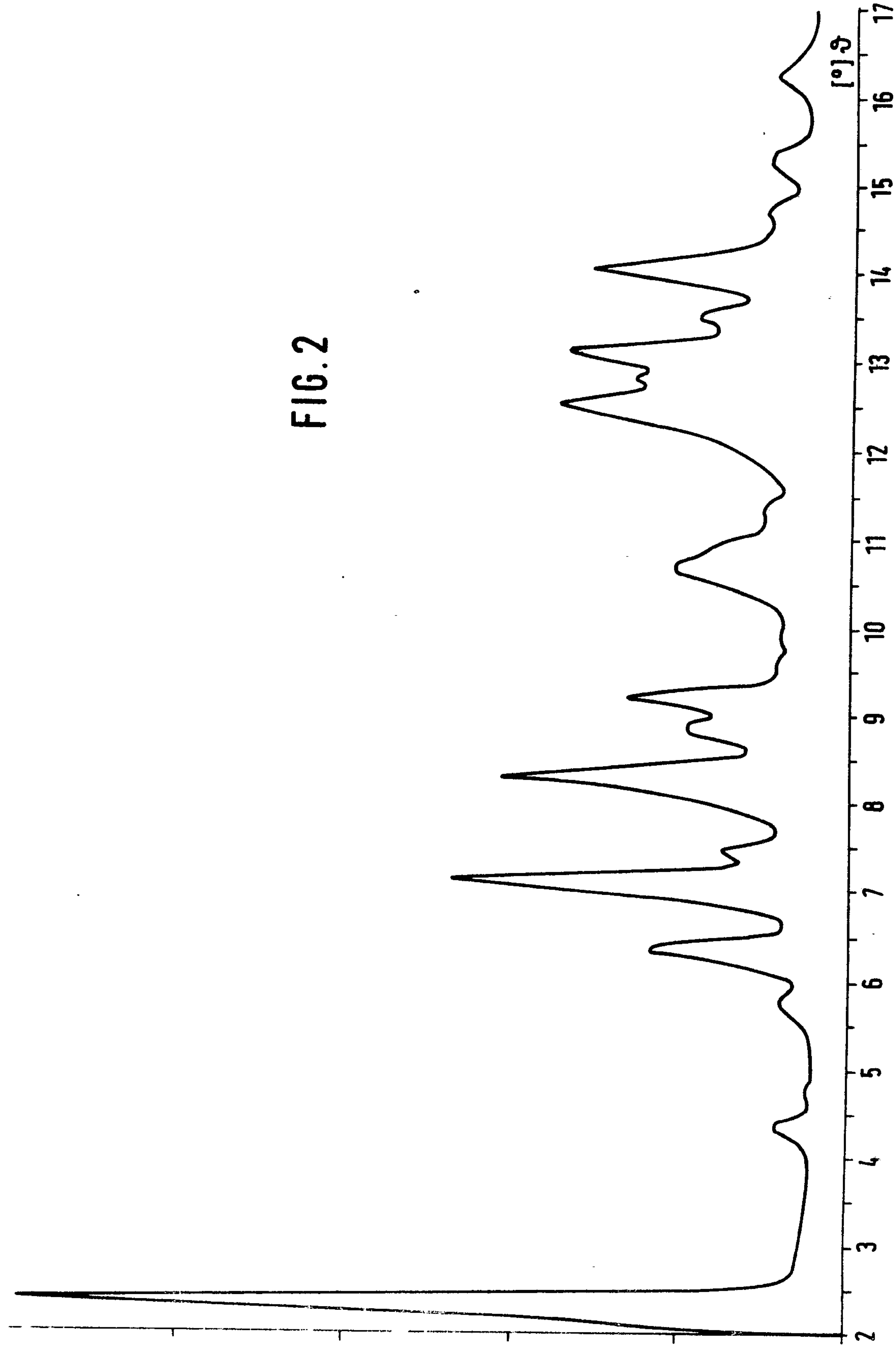


FIG. 2